**Europäisches Patentamt**

**European Patent Office**

**Office européen des brevets**

(11) Veröffentlichungsnummer: **0 226 186 B1**

# EUROPÄISCHE PATENTSCHRIFT

(45) Veröffentlichungstag der Patentschrift: **01.04.92**

(21) Anmeldenummer: **86117291.4**

(22) Anmeldetag: **11.12.86**

(51) Int. Cl.⁵: **G11B 33/04**

(54) **Aufbewahrungsbehälter für Compactdisks.**

(30) Priorität: **20.12.85 DE 3545163**

(43) Veröffentlichungstag der Anmeldung:
**24.06.87 Patentblatt 87/26**

(45) Bekanntmachung des Hinweises auf die
Patenterteilung:
**01.04.92 Patentblatt 92/14**

(84) Benannte Vertragsstaaten:
**DE FR GB IT**

(56) Entgegenhaltungen:
**EP-A- 0 092 666      EP-A- 0 132 533**
**EP-A- 0 139 161      EP-A- 0 141 113**
**EP-A- 0 141 937      EP-A- 0 163 221**
**WO-A-86/03877        FR-A- 685 404**

(73) Patentinhaber: **idn inventions and develop-**
**ment of novelties ag**
**Hartbertstrasse 9**
**CH-7002 Chur(CH)**

(72) Erfinder: **Ackeret, Peter**
**Allmendstrasse 18**
**CH-8700 Küsnacht(CH)**

(74) Vertreter: **Sparing Röhl Henseler Patentan-**
**wälte European Patent Attorneys**
**Rethelstrasse 123**
**W-4000 Düsseldorf 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung betrifft einen Aufbewahrungsbehälter für plattenförmige Aufzeichnungsträger, also Schall- oder Bildplatten, und ist insbesondere für Compactdisks bestimmt und geeignet.

Solche Aufbewahrungsbehälter sind vielfältig bekannt. So offenbart EP-A-141 937 in den Figuren 21 bis 24 einen Aufbewahrungsbehälter für Compactdisks, der die im Oberbegriff des Patentanspruchs 1 genannten Merkmale aufweist. Bei diesem bekannten Behälter ist die Wandung, die die offene Gehäusefront abdeckt, allen Haltern gemeinsam zugeordnet und schwenkt mit jeweils einem ausgewählten Halter mit heraus. Die Entnahme der Disk bzw. ihr Einlegen ist nur dann bequem, wenn der Halter entsprechend weit herausgeschwenkt wird, etwa um ca. 90°. Bei Verwendung in einem Kraftfahrzeug ragt dann der ausgeschwenkte Halter störend und vielleicht sogar gefährlich weit in das Fahrzeuginnere.

Aufgabe der Erfindung ist es, einen gattungsgleichen Behälter zu schaffen, bei dem der Ausschwenkwinkel sehr viel kleiner sein darf und gleichwohl die Disks bequem handhabbar sind.

Die Lösung dieser Aufgabe erfolgt erfindungsgemäß durch die kennzeichnenden Merkmale des Anspruchs 1. Die Unteransprüche definieren zweckmäßige Weiterbildungen dieses Konzepts.

Es ist anzumerken, daß aus EP-A-139 161 bereits ein Behälter für Compactdisks bekannt ist, der für die Verwendung in Kraftfahrzeugen bestimmt und geeignet ist. Bei ihm sind jedoch die gegebenenfalls mit einer abklappbaren Frontwand versehenen Halter translatorisch beweglich, was den Platzbedarf in der Tiefe relativ groß werden läßt.

Ausführungsbeispiele des Gegenstandes der Erfindung werden nachstehend unter Bezugnahme auf die beigefügten Zeichnungen im einzelnen erläutert.

| | |
|---|---|
| Fig. 1 bis 3 | zeigen in schematisierter Form drei mögliche Ausführungsformen, |
| Fig. 4 | zeigt im Schnitt parallel zur Hauptebene einer aufzubewahrenden Compactdisk eine weitere Ausführungsform eines erfindungsgemäßen Behälters, |
| Fig. 5 | ist ein Schnitt nach Linie 5-5 der Fig. 4, |
| Fig. 6 | ist eine Teilseitenansicht gemäß Pfeil 6 in Fig. 4, |
| Fig. 7 | ist ein gegenüber Fig. 6 vergrößerter Schnitt durch die Verriegelungsbaugruppe aus Fig. 4, |
| Fig. 8 | zeigt in zu Fig. 7 analoger Form eine alternative, vereinfachte Gestaltung, |
| Fig. 9 | ist ein Schnitt nach Linie 9-9 der Fig. 8, |
| Fig. 10 | zeigt perspektivisch ein Detail des Systems nach Fig. 8 und 9, |
| Fig. 11 | zeigt im Schnitt ähnlich Fig. 7 eine weitere Variante, |
| Fig. 12 | stellt eine weitere Variante perspektivisch dar und |
| Fig. 13 bis 16 | zeigen eine letzte Variante in verschiedenen Ansichten und Schnitten. |

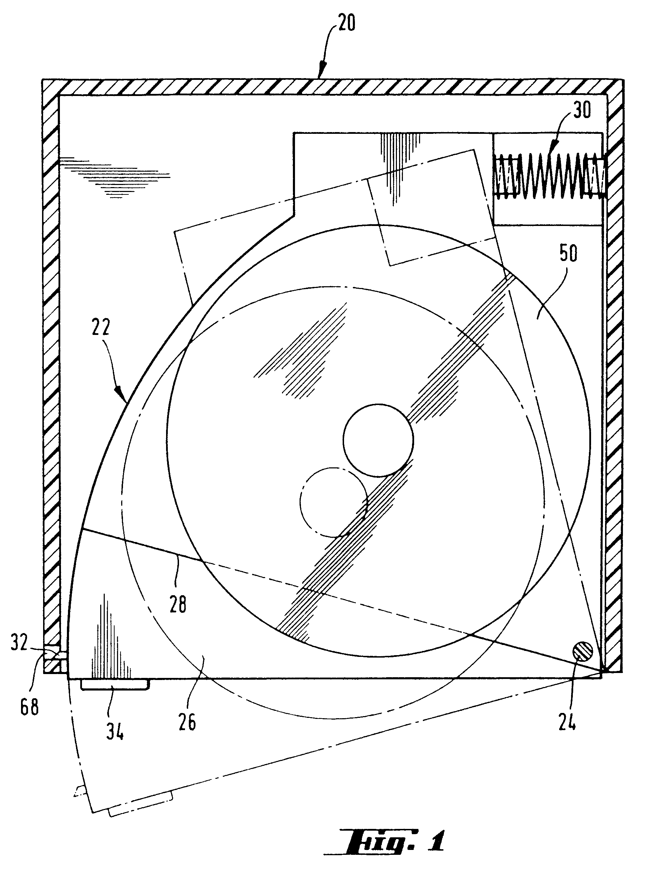

In Fig. 1, 2 und 3 ist jeweils schematisch ein Schnitt parallel zu der Hauptebene einer aufzubewahrenden Compactdisk (nachstehend kurz nur noch als "Disk" bezeichnet) durch ein Behälterfach gezeigt. Jeder Behälter umfaßt ein Gehäuse 20 für einen Halter 22 -- das Gehäuse kann vorzugsweise auch eine Mehrzahl von zueinander parallelen Haltern aufnehmen -- die um eine im Gehäuse angebrachten Zapfen 24 schwenkbar sind. Der Schwenkwinkel ist durch Anschläge begrenzt (in Fig. 1 bis 3 nicht gezeichnet). Jeder Halter ist mit einer Frontwandbaugruppe 26 versehen, die die Gehäuseöffnung bei eingeschwenktem Halter abdeckt und bei ausgeschwenktem Halter von diesem um eine Achse 28 abklappen kann. Jeder Halter ist von einer Federanordnung 30 in die Ausschwenkposition vorgespannt und wird gegen die Vorspannung in der Einschwenklage durch eine Riegelanordnung 32 gehalten, die mittels einer manuell betätigbaren Taste 34 lösbar ist.

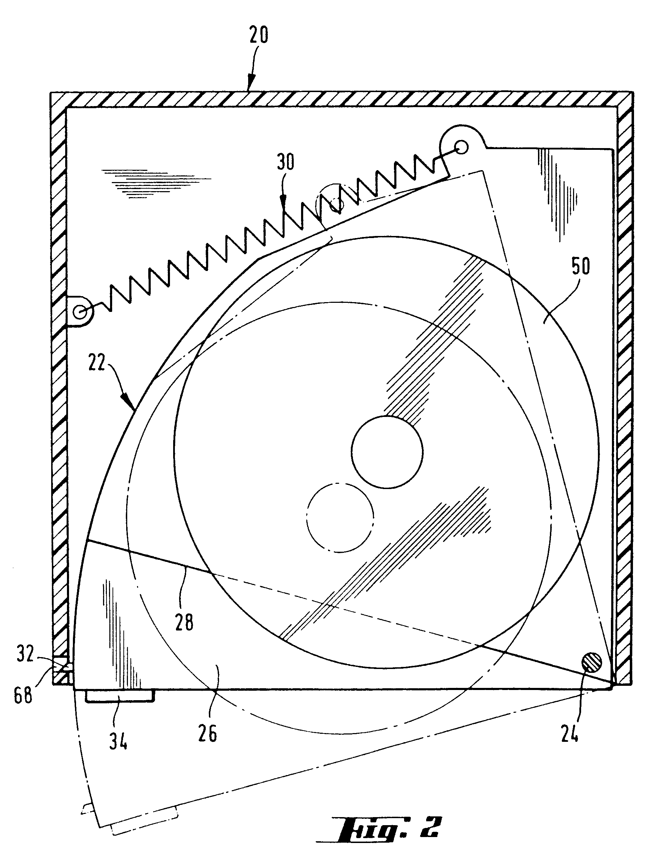

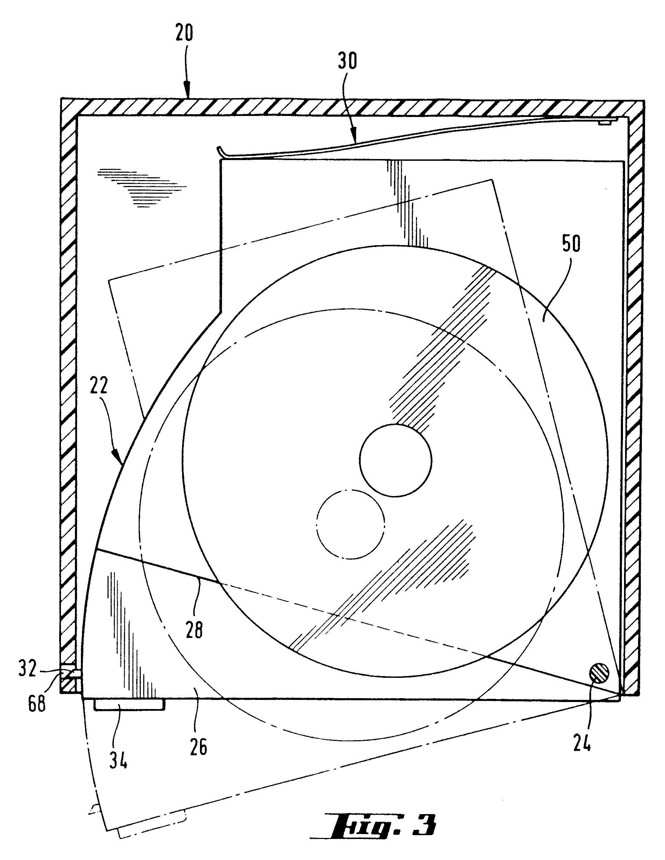

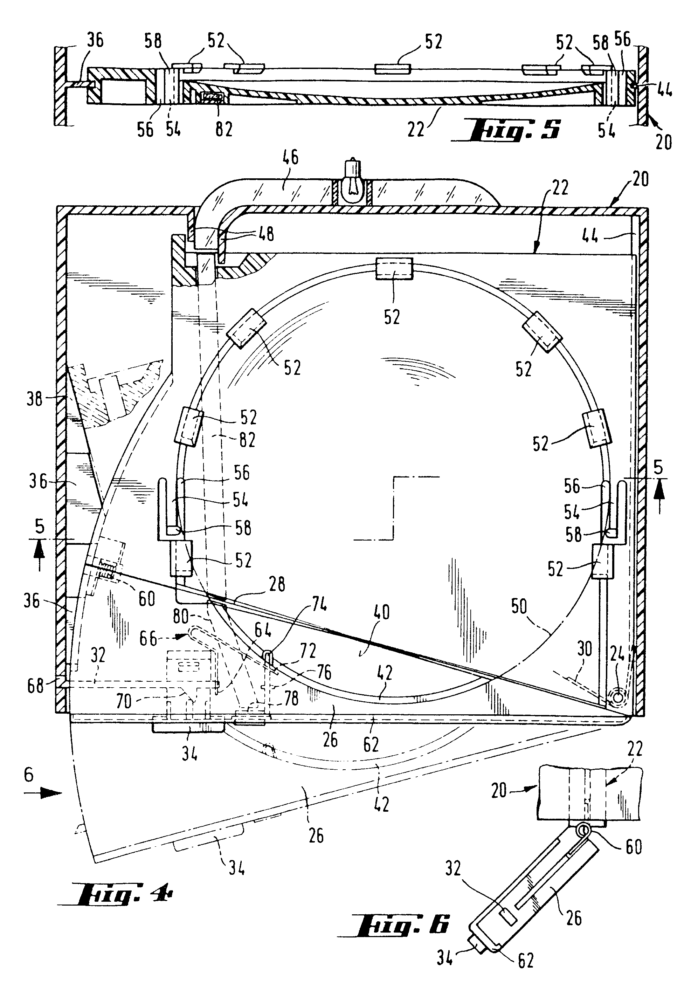

Die drei Ausführungsformen nach Fig. 1 bis 3 unterscheiden sich durch die Ausbildung der Federanordnung: In Fig. ist ist die Federanordnung 30 durch eine Schraubendruckfeder verkörpert, in Fig. 2 durch eine Schraubenzugfeder und in Fig. 3 durch eine Blattfeder. Es versteht sich, daß der Platzbedarf für die Halter-Feder-Kombination in der Darstellung nach Fig. 1 bis 3 übertrieben gezeichnet ist; in der Realität ist der Platzbedarf wesentlich geringer. Eine besonders platzsparende Bauweise ergibt sich bei Verwendung einer Schenkelhalsfeder, wie dies in den Fig. 4 bis 7 dargestellt ist.

Man erkennt auch hier Gehäuse 20, Halter 22, Zapfen 24, Frontwandbaugruppe 26, Achse 28, Federanordnung 30, Riegelbaugruppe 32 und Auslösetaste 34.

Die Federanordnung ist hier als Schenkelhalsfeder ausgebildet, deren einer Arm sich an einer Seitenwand des Gehäuses abstützt, während der andere auf den Halter 22 einwirkt. Der Halter ist mit ausgezogenen Linien in seiner Einschwenkposition gezeichnet, während die Ausschwenkposition nur an einzelnen Stellen strichpunktiert angedeutet ist. Der Halter ist plattenförmig und gegenüber dem Zapfen 24 von an das Gehäuse 20 angeformten, einwärts einspringenden Führungslappen 36 umgriffen. Seine Ausschwenkbewegung wird durch einen neben dem Führungslappen im Gehäuse vorgesehenen Anschlag 38 begrenzt. Die Achse 28, um die die Frontwandbaugruppe wegklappbar ist, verläuft bei ausgeschwenktem Halter unmittelbar vor der Gehäuseöffnung und parallel zu deren Kanten. Der Halter 22 ist konkav eingetieft, wie in Fig. 5 erkennbar, so daß die Disk weder in ihrer Aufbewahrungsposition noch während Entnahme oder Einlegen in ihrem Aufzeichnungsbereich am Halter zerkratzt werden kann; nur ihr Rand liegt am Halter an. Auch der sektorförmige Bodenteil 40 der Frontwandbaugruppe stützt die Disk nur mit seinem hochstehenden Ringabschnitt 42 ab.

An der Gehäuseinnenseite gegenüber den Führungslappen 36 ist eine Stützschiene 44 für den Halter angeformt, und durch die Rückseite des Gehäuses ragt ein Lichtleiter 46 in den Innenraum, gehalten und abgeschirmt von einwärts einspringenden Hülsenteilen 48 des Gehäuses. Eine Lichtquelle leuchtet den Austritt des Lichtleiters 46 im Gehäuseinneren aus.

Die Disk 50 wird auf dem Halter durch übergreifende, an den Halter angeformte Niederhalter 52 gesichert. Ebenfalls an den Halter angeformt sind zwei Federzungen 54, die dank Bodenausschnitten 56 des Halters bei Herausziehen oder Einschieben der Disk ausfedern können und die Disk ebenfalls mit Niederhaltern 58 übergreifen; beim Ausschwenken des Halters bremsen sie die Disk, so daß sie nicht herausgeschleudert wird, und beim Einschieben üben sie, wenn die Disk sie zur Hälfte passiert hat, eine einwärts gerichtete Kraft auf die Disk auf, wodurch diese in die vorbestimmte Ruheposition "gesogen" wird.

Eine weitere Schenkelhalsfeder 60 spannt die Frontwandbaugruppe 26 in ihre weggeklappte Position vor, die durch Anschläge festgelegt ist und derart vorgesehen ist, daß die Bewegung der Disk an der eigentlichen Frontwand 62 vorbei erfolgen kann und auch das ausgeschwenkte Segment der Disk beidseits erfaßt werden kann.

Im Halter ist gegenüber dem Zapfen 24 ein Riegel 32 verschieblich parallel zur Frontwand gelagert und von einem Arm 64 einer im Halter verankerten Drahtfeder 66 in die ausgefahrene Position vorgespannt, in der der Riegel in einem Durchbruch 68 der Gehäuseseitenwand einrastet. Der Riegel weist eine Keilfläche 70 auf, an der die Taste 34 angreifen kann, um durch Eindrücken den Halter zu entriegeln. Ein zweiter Arm 72 der Drahtfeder spannt einen Taster 74 in eine Position vor, in der sein freies Ende in den Raum ragt, der von einer eingeschobenen Disk belegt wird; der Taster ist um ein Gelenk 76 schwenkbar und wird durch Einschieben einer Disk gegen die Federvorspannung verdreht. Dabei betätigt er auch eine mit ihm verbundene Blende 78 vor dem Lichtaustritt eines Lichtleiters 80, der in die Frontwandbaugruppe eingelegt ist und über einen im Halter verlegten weiteren Lichtleiter 82 ausgeleuchtet wird, der seinerseits das Licht aus dem Lichtleiter 46 empfängt. Lage und Querschnitt der Lichtleiter sind in Fig. 5 erkennbar. Vor der Blende ist die Frontwand durchbrochen, so daß je nach Blendenstellung erkennbar ist, ob der betreffende Halter mit einer Disk belegt oder frei ist.

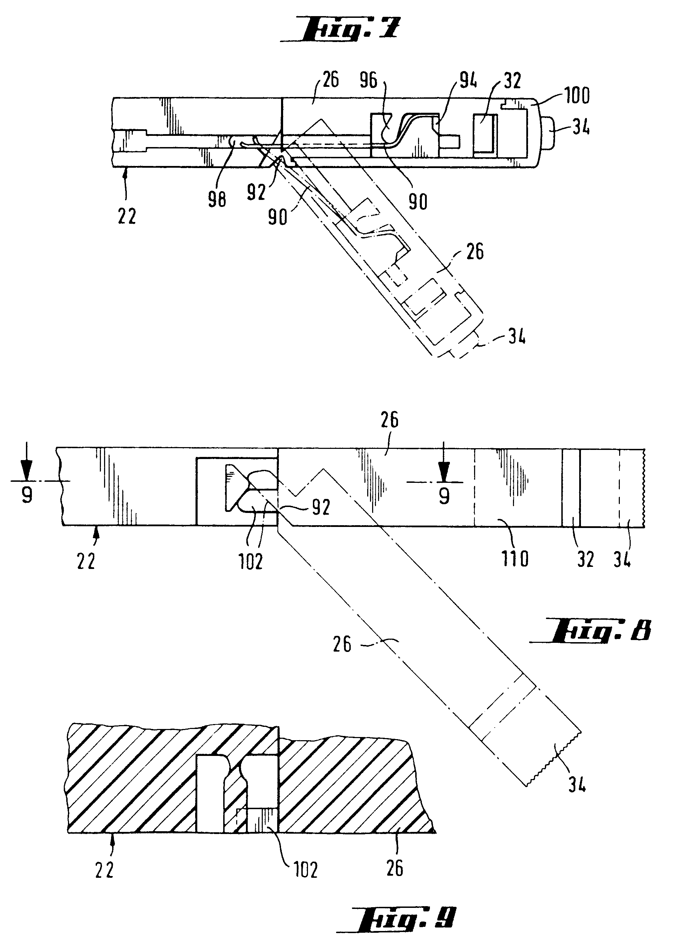

Anstelle der Schenkelhalsfeder 60 kann man die in Fig. 7 erkennbare Blattfeder 90 einsetzen. In dieser Figur erkennt man auch das Gelenk 92, das die Frontwandbaugruppe mit dem Halter verbindet; Halter und Frontwandbaugruppe sind gemeinsam einstückig aus einem Kunststoff gespritzt, der die Ausbildung des Gelenks als sogenanntes Filmgelenk ermöglicht. Diese Bauweise gilt übrigens für alle beschriebenen Ausführungsbeispiele.- Die Blattfeder 90 ist mit ihrem einen Ende unter eine Nase 94 in einer Ausnehmung, die sich von unten in die Frontwandbaugruppe erstreckt, geklemmt und über ein Stützteil 96 geboden und in einen Schlitz 98 des Halters gesteckt. Im abgeklappten Zustand bildet sie zugleich den Anschlag zum Begrenzen des Klappwinkels. Die Ausnehmung der Frontwandbaugruppe ist durch eine aufgeklipste Zierblende 100 verschlossen, die einen Durchbruch für die Taste 34 aufweist.

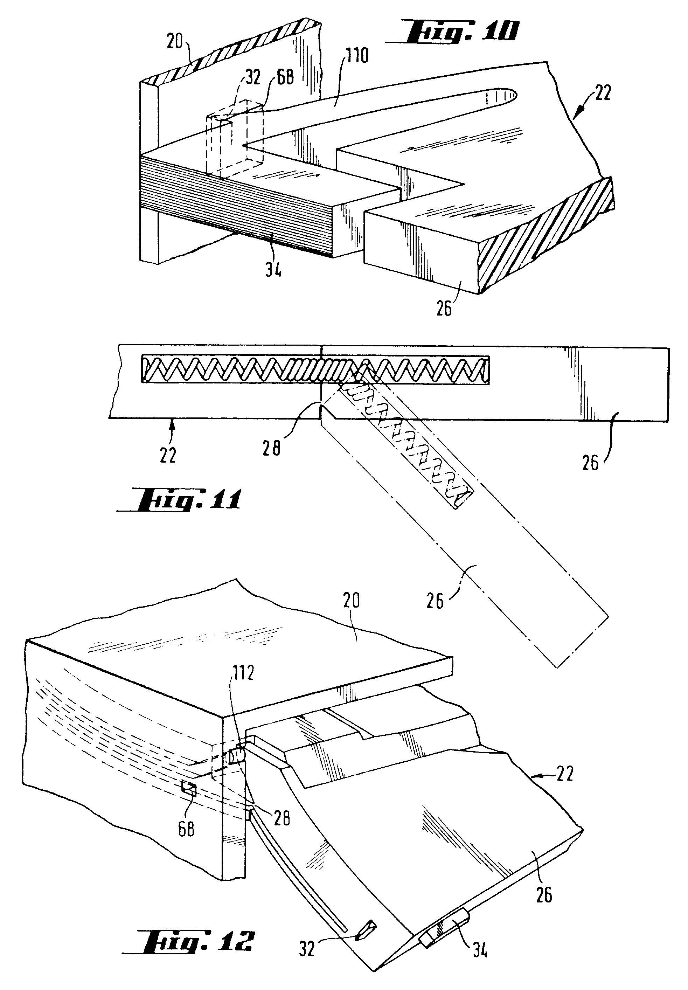

Bei den bisher beschriebenen Ausführungsbeispielen ist die Frontwandbaugruppe in die abgeklappte Position vorgespant. Zum Verstauen einer Disk wird diese also in den ausgeschwenkten Halter geschoben, und der Benutzer muß dann von Hand die Frontwandbaugruppe anheben, wobei vorteilhafterweise die mit der Führung ausgefluchtete Lage durch eine Anschlaganordnung definiert ist, und dann den Halter eindrücken. In der Ausführungsform nach Fig. 8 und 9 wird die Frontwandbaugruppe manuell weggeklappt und wieder zurückgeklappt, wobei sie mit einem angeformten Nocken 102 einen an den Halter angeformten federnden Hebel auslenkt.

Fig. 11 zeigt eine weitere Möglichkeit für die Vorspannung der Frontwandbaugruppe mittels einer eingebetteten Schraubendruckfeder, deren Windungen im Gelenkbereich eng aneinanderliegen, um Kratzgeräusche zu unterbinden.

Die Fig. 10 stellt eine vereinfachte Verriegelungseinrichtung dar, bei der der Riegel 32 und die Taste 34 aus dem Material der Frontwandbaugruppe ausgeformt sind und auf einem einwärts federnd auslenkbaren Arm 110 sitzen. Diese Bauart kann z.B. mit der Vorspannungsanordnung nach Fig. 8/9 kombiniert werden.

Anstelle einer eigenen Vorspannfeder kann die Abklappbewegung der Frontwandbaugruppe auch durch die Ausschwenkfeder 30 bewirkt werden, indem deren Kraft über Zwangssteuermittel 112 auf die Frontwandbaugruppe übertragen wird, wie in Fig. 12 angedeutet.

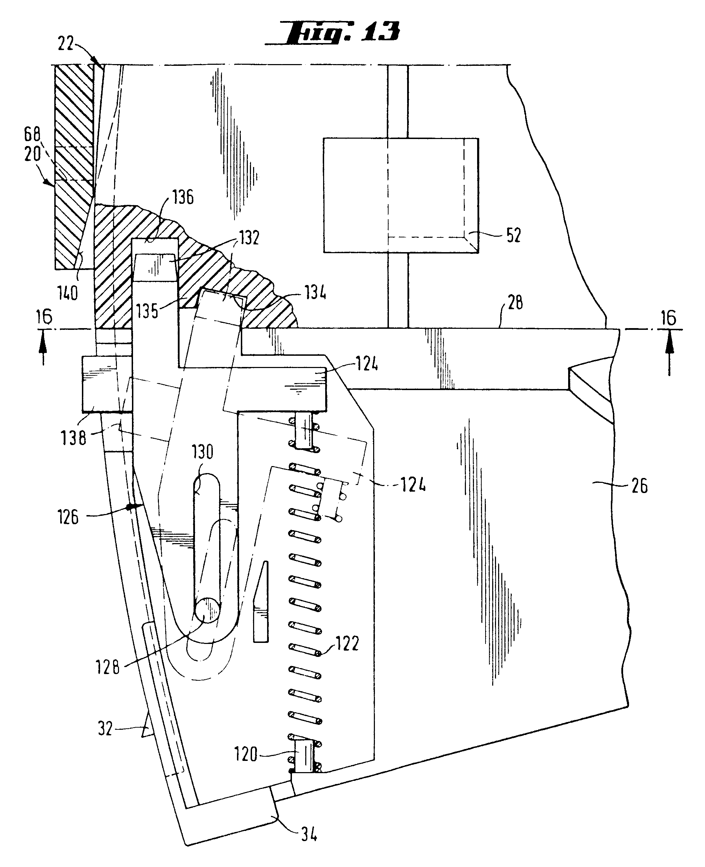

Schließlich zweigen die Figuren 13 bis 17 eine Ausführungsform, bei der die Frontwandbaugruppe beim Ausschwenken des Halters von einer Feder in die weggeklappte Position verschwenkt wird, etwa gemäß der Konstruktion nach Fig. 7. Allerdings ist hier Vorsorge dafür getroffen, daß die Frontwandbaugruppe manuell wieder hochgeklappt werden kann und in dieser Stellung verharrt, bis der Halter in seine Aufbewahrungsposition zurückgeschwenkt wird.

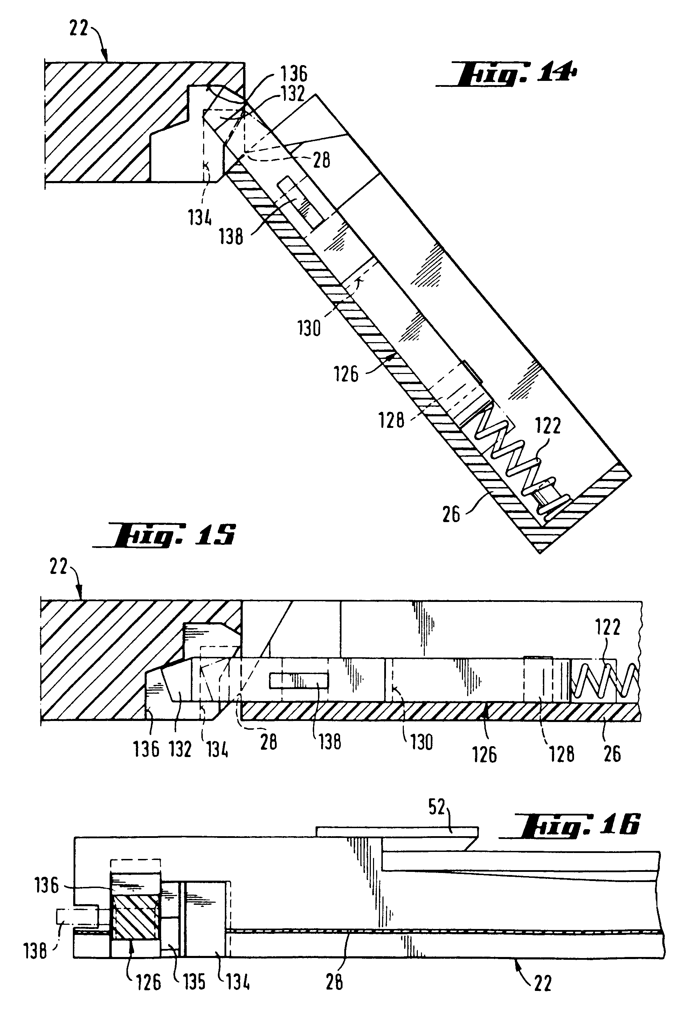

Gemäß Fig. 13, die eine Ansicht von unten auf die Frontwandbaugruppe darstellt, ist nahe der eigentlichen Frontwand ein Zapfen 120 angeformt, auf dem ein Ende einer Schraubendruckfeder 122 aufgesteckt ist. Sie greift an einem Arm 124 des mehrarmigen Hebels 126 an, der um einen festen Drehpunkt 128 schwenkbar sowie wegen des Langlochs 130 längs dieses Drehpunkts translatorisch verschieblich ist. In der Ausgangsposition wird der Hebel in der in Fig. 13 bis 16 gestrichelt gezeichneten Lage gehalten, weil sein Ende 132 sich in einer Ausnehmung 134 verankert. Am Ende der Abklappbewegung -- in Fig. 13 bis 16 mit ausgezogenen Linien gezeichnet -- kann das Hebelende 132 an der Trennleiste 135 unter der seitlich gerichteten Kraftkomponente der Feder vorbeischwenken und in die Ausnehmung 136 einfallen, wobei sich der Hebel längs seines Langlochs auf dem Drehpunkt-Zapfen verschiebt. In dieser Position dient das Hebelende zugleich als Endanschlag für die Klappbewegung (Fig. 14). Durch Hochklappen von Hand gelangt der Hebel in die Position nach Fig. 15, in der der Bodenabschnitt der Frontwandbaugruppe mit der Halterfläche ausgefluchtet steht. Wird versehendtlich in dieser Stellung nochmals die Frontwandbaugruppe abgeklappt, so kann der Hebel nachgeben, da auf seine anliegende Keilfläche wirkender Druck in eine entsprechende Verlagerung des Hebels umgesetzt wird. Beim Einschwenken des Halters läuft der Arm 138 des Hebels auf die Schräge 140 am Gehäuse auf, wird dabei um dem Drehpunkt herum verschwenkt und nimmt seine Ausgangsposition wieder ein.

**Patentansprüche**

1. Aufbewahrungsbehälter für plattenförmige Aufzeichnungsträger, insbesondere für Compactdisks (50), umfassend ein Gehäuse (20) mit einer Mehrzahl von Haltern (22) für je einen Aufzeichnungsträger, welche Halter aus dem Gehäuse in eine Entnahmeposition um eine zur Aufzeichnungsträger-Hauptebene senkrechte Achse (24) schwenkbar sind, in welcher Entnahmeposition die Aufzeichnungsträger zangenartig erfaßbar und herausziehbar sind, wobei die Aufnahmefächer des Gehäuses bei eingeschwenkten Haltern von einer Wandung (62) abgedeckt sind, jeder Halter ein Innenteil aufweist, das um die nahe der Gehäusefront und nahe einer Gehäuseseitenwandung angeordnete Achse schwenkbar ist, jeder Halter von einer Feder in seine durch einen Anschlag festgelegte ausgeschwenkte Position vorgespannt und in seiner eingeschwenkten Position mittels einer Verriegelung, die nahe der anderen Seitenwandung angeordnet ist, gegen die Federvorspannung arretiert ist, dadurch gekennzeichnet, daß die ausgeschwenkte Position durch den Anschlag so festgelegt ist, daß eine am Innenteil angelenkte Frontwandbaugruppe (26) mit ihrer zur Schwenkachse senkrechten Anlenkachse (28) in den Frontbereich des Gehäuses zu liegen kommt, während die Frontwandbaugruppen in der eingeschwenkten Position gemeinsam die Abdeckwandung bilden.

2. Behälter nach Anspruch 1, dadurch gekennzeichnet, daß der Halter (22) plattenartig die lichte Breite des Gehäuses überspannend ausgebildet ist.

3. Behälter nach Anspruch 1 oder 2, dadurch gekennzeichnet, daß die Frontwandbaugruppe (26) über ein angespritztes Filmgelenk (92) mit dem Halter verbunden ist.

4. Behälter nach Anspruch 1, 2 oder 3, dadurch gekennzeichnet, daß die Frontwandbaugruppe (26) eine stegartig hochstehende Frontwand (62) umfaßt, verbunden mit einem kreissegmentförmigen Bodenabschnitt.

5. Behälter nach Anspruch 1, 2, 3 oder 4, dadurch gekennzeichnet, daß der Klappwinkel der Frontwandbaugruppe (26) durch Anschläge definiert ist.

6. Behälter nach Anspruch 1, dadurch gekennzeichnet, daß die Frontwandbaugruppe (26) bei ausgeschwenktem Halter (22) in ihre weggeklappte Stellung zwangsbewegt ist.

7. Behälter nach Anspruch 6, gekennzeichnet durch eine Vorspannfeder (60) für das Wegklappen der Frontwandbaugruppe.

8. Behälter nach Anspruch 7, dadurch gekennzeichnet, daß die Vorspannfeder eine Blattfeder (90) ist.

9. Behälter nach Anspruch 7, dadurch gekennzeichnet, daß die Vorspannfeder eine Schraubendruckfeder (122) ist.

10. Behälter nach Anspruch 7, dadurch gekennzeichnet, daß die Vorspannfeder eine Schraubenzugfeder ist.

11. Behälter nach Anspruch 7, dadurch gekennzeichnet, daß die Vorspannfeder eine Schenkelhalsfeder (60) ist.

12. Behälter nach Anspruch 7, dadurch gekennzeichnet, daß die Kraft der den Halter (22) in die ausgeschwenkte Position vorspannenden Feder (30) über eine Kraftübertragung (112) auf die Frontwandbaugruppe (26) übertragen wird.

13. Behälter nach Anspruch 1, dadurch gekennzeichnet, daß die Frontwandbaugruppe (26) von einer Froschfederanordnung (102) in jede ihrer beiden stabilen Endlagen vorgespannt ist und manuell aus der einen in die andere bewegbar ist.

14. Behälter nach Anspruch 7, gekennzeichnet durch eine Rastanordnung (132) zum Halten der Frontwandbaugruppe (26) in der zurückgeklappten Position für das Wiedereinschwenken des Halters (22) in das Gehäuse (20).

15. Behälter nach Anspruch 1, dadurch gekennzeichnet, daß jeder Halter (22) für seine Schwenkbewegung an seiner der Schwenkachse (24) abgewandten Endkante mittels einer gehäusefesten Führung (36) geführt ist.

16. Behälter nach Anspruch 1, dadurch gekennzeichnet, daß jeder Halter in seiner eingeschwenkten Position von einer gehäusefesten Stützschiene (36) abgestützt ist.

17. Behälter nach Anspruch 15, dadurch gekennzeichnet, daß die Frontwandbaugruppe eine von einem sektorförmigen Bodenabschnitt hochstehende Frontwand (62) aufweist und daß der Bodenabschnitt ebenfalls im Gehäuse schwenkbeweglich geführt ist.

18. Behälter nach Anspruch 1, dadurch gekennzeichnet, daß der Halter (22) eine konkav eingetiefte Bodenfläche aufweist.

19. Behälter nach Anspruch 17 und 18, dadurch gekennzeichnet, daß der Bodenabschnitt der Frontwandbaugruppe eine den eingelegten Aufzeichnungsträger (50) nur in seinem Randbereich abstützende Auskragung (42) aufweist.

20. Behälter nach Anspruch 2, dadurch gekennzeichnet, daß der Halter (22) mit Niederhaltern (52) für eine auf ihm ruhende Schall- oder Bildplatte (50) versehen ist.

21. Behälter nach Anspruch 20, dadurch gekennzeichnet, daß zumindest einer der Niederhalter (52) an einem quer zur Einschubrichtung der Platte ausfedernden Arm (54) angeordnet ist.

22. Behälter nach Anspruch 21, dadurch gekennzeichnet, daß der federnde Arm (54) derart ausgebildet und angeordnet ist, daß er nach Einschieben der Platte (50) um mehr als die Hälfte ihres Durchmessers eine einwärts gerichtete Kraft auf die Platte ausübt.

23. Behälter nach Anspruch 11, dadurch gekennzeichnet, daß die Schenkelhalsfeder mit ihrem Wickel auf einem Zapfenlager (24) für die Schwenkbewegung des Halters sitzt.

24. Behälter nach Anspruch 1, dadurch gekennzeichnet, daß in der Frontwandbaugruppe ein Riegel (32) gelagert ist, der mittels einer von der Außenseite der Frontwand zugänglichen Taste (34) aus einer gehäuseseitigen Falle (68) heraushebbar ist.

25. Behälter nach Anspruch 24, dadurch gekennzeichnet, daß der Riegel (32) im wesentlichen parallel zur Frontwandebene in der Frontwandbaugruppe (26) verlagerbar aufgenommen ist.

26. Behälter nach Anspruch 24, dadurch gekennzeichnet, daß der Riegel in seine Verriegelungsposition federvorgespannt (66) ist.

27. Behälter nach Anspruch 1, dadurch gekennzeichnet, daß an die Frontwandbaugruppe (26) ein Riegel und eine mit diesem verbundene Taste federnd gegenüber dem Rest der Frontwandbaugruppe angeformt sind.

28. Behälter nach Anspruch 1, dadurch gekennzeichnet, daß eine Anzeigeeinrichtung (80, 82, 74) vorgesehen ist, die kenntlich macht, ob ein in das Gehäuse eingeschwenkter Halter mit einem Aufzeichnungsträger belegt oder frei ist.

29. Behälter nach Anspruch 28, dadurch gekennzeichnet, daß die Anzeigeeinrichtung einen in den Aufnahmeraum des Aufzeichnungsträgers ragenden und durch dessen Einschieben verlagerbaren Taster (74) umfaßt, der eine optische Anzeige (80, 82) umschaltend ausgebildet und angeordnet ist.

30. Behälter nach Anspruch 28 oder 29, dadurch gekennzeichnet, daß die Anzeigeeinrichtung eine Lichtquelle (46) zum Ausleuchten eines Anzeigefensters umfaßt und der Lichtfluß in Abhängigkeit vom Belegungszustand des Halters moduliert ist.

31. Behälter nach Anspruch 30, dadurch gekennzeichnet, daß die Lichtquelle (46) außerhalb des Gehäuses angeordnet ist und mittels Lichtleitern (80, 82) das Licht zu einem in der Frontwandbaugruppe ausgebildeten Anzeigefenster übertragen wird.

32. Behälter nach Anspruch 31, gekennzeichnet durch im Halter und/oder in der Frontwandbaugruppe verlegte Lichtleiter (80, 82).

33. Behälter nach Anspruch 29 und 32, dadurch gekennzeichnet, daß der Taster (74) zum Betätigen einer den Lichtfluß unterbrechenden bzw. freigebenden Blende (78) ausgebildet und angeordnet ist.

## Claims

1. A storage container for platter-like recording media, in particular for compact discs (50), comprising a housing (20) with a plurality of holders (22) for one recording medium in each case, which holders are arranged to be pivoted out of the housing into a removal position about an axis (24) at right angles to the main plane of the recording media, in which removal position the recording media can be gripped pincer-fashion and pulled out, the receiving compartments of the housing being covered when the holders are in the pivoted-in position by a wall means (62), each holder having an inner part which is pivotable about the axis arranged close to the housing front and close to a housing side wall, each holder being biassed by a spring into its pivoted-out position fixed by a stop member and being locked in its pivoted-in position against the bias of the spring by means of a locking mechanism that is arranged close to the other side wall, characterized in that the pivoted-out position is fixed by the stop member so that a front wall assembly (26), hinged to the inner part with its hinge axis (28) at right angles to the pivot axis, comes to lie, in the front region of the housing, whereas in the pivoted-in position the front wall assemblies together form the covering wall means.

2. A container according to claim 1, characterized in that the holder (22) is in the shape of a platter which spans the internal width of the housing.

3. A container according to claim 1 or 2, characterized in that the front wall assembly (26) is connected to the holder by means of an integral injection-moulded film hinge (92).

4. A container according to claim 1, 2 or 3, characterized in that the front wall assembly (26) comprises a rail-like upwardly projecting front wall (62) joined to a bottom section in the form of a segment of a circle.

5. A container according to claim 1, 2, 3 or 4, characterized in that the angle through which the front wall assembly (26) hinges is defined by stop members.

6. A container according to claim 1, characterized in that the front wall assembly (26) is constrained to move into its hinged-away position when the holder (22) is pivoted out.

7. A container according to claim 6, characterized by a biassing spring (60) for hinging away the front wall assembly.

8. A container according to claim 7, characterized in that the biassing spring is a leaf spring (90).

9. A container according to claim 7, characterized in that the biassing spring is a helical compression spring (122).

10. A container according to claim 7, characterized in that the biassing spring is a helical tension spring.

11. A container according to claim 7, characterized in that the biassing spring is a coiled torsion spring with projecting ends (60).

12. A container according to claim 7, characterized in that the force of the spring (30) biassing the holder (22) into the pivoted-out position is transmitted to the front wall assembly (26) by way of a force-transmitting member (112).

13. A container according to claim 1, characterized in that the front wall assembly (26) is biassed by an over-centre spring arrangement (102) into each of its two stable end positions and is arranged to be moved manually from one position into the other position.

14. A container according to claim 7, characterized by a locking arrangement (132) for retaining the front wall assembly (26) in the hinged-back position for pivoting the holder (22) back into the housing (20).

15. A container according to claim 1, characterized in that each holder (22) is guided for its pivoting movement at its end edge remote from the pivot axis (24) by means of guide means (36) fixed to the housing.

16. A container according to claim 1, characterized in that each holder is supported in its pivoted-in position by a supporting rail (36) fixed to the housing.

17. A container according to claim 15, characterized in that the front wall assembly comprises a front wall (62) projecting upwardly from a sector-shaped base section, and the base section is likewise guided in the housing for pivoting movement.

18. A container according to claim 1, characterized in that the holder (22) has a concavely dished bottom surface.

19. A container according to claim 17 and 18, characterized in that the base section of the front wall assembly has a projection (42) supporting the inserted recording medium (50) only at its edge region.

20. A container according to claim 2, characterized in that the holder (22) is provided with holding-down members (52) for a phonographic or video disc (50) resting on it.

21. A container according to claim 20, characterized in that at least one of the holding-down members (52) is arranged on an arm (54) that yields resiliently transversely to the insertion direction of the disc.

22. A container according to claim 21, characterized in that the resilient arm (54) is constructed and arranged so that, after the disc (50) has been inserted by more than half its diameter, it exerts an inwardly directed force on the disc.

23. A container according to claim 11, characterized in that the coiled torsion spring with projecting ends rests with its coiled portion on a pivot bearing (24) for the pivoting movement of the holder.

24. A container according to claim 1, characterized in that in the front wall assembly there is mounted a locking member (32) which is arranged to be lifted out of a trap (68) in the housing by means of a button (34) accessible from the outside of the front wall.

25. A container according to claim 24, characterized in that the locking member (32) is received in the front wall assembly so as to be displaceable substantially parallel to the plane of the front wall.

26. A container according to claim 24, characterized in that the locking member is spring-biassed (66) into its locking position.

27. A container according to claim 1, characterized in that a locking member and a button connected thereto are moulded on the front wall assembly (26) so as to be sprung with respect to the remainder of the front wall assembly.

28. A container according to claim 1, characterized in that an indicating arrangement (80, 82, 74) is provided, which indicates whether a holder pivoted into the housing is occupied by a recording medium or is empty.

29. A container according to claim 28, characterized in that the indicating arrangement comprises a feeler (74) which projects into the area in which the recording medium is received and is displaceable by insertion of the same, and which is constructed and arranged to change over an optical indicating means (80, 82).

30. A container according to claim 28 or 29, characterized in that the indicating arrangement comprises a light source (46) for illuminating an indicating window and the light flux is modulated in dependence on the occupancy state of the holder.

31. A container according to claim 30, characterized in that the light source (46) is arranged outside the housing and the light is transmitted by means of light guides (80, 82) to an indicating window formed in the front wall assembly.

32. A container according to claim 31, characterized by light guides (80, 82) positioned in the holder and/or in the front wall assembly.

33. A container according to claim 29 and 32, characterized in that the feeler (74) is constructed and arranged to actuate a shutter (78) that blocks or unblocks the light flux.

**Revendications**

1. Coffret de stockage destiné à des supports d'enregistrement en forme de disques, en particulier pour des disques compacts (50), comprenant un boîtier (20) comportant plusieurs éléments porteurs (22), destinés chacun à un support d'enregistrement, éléments porteurs qui peuvent pivoter hors du coffret autour d'un axe (24) perpendiculaire au plan principal des supports d'enregistrement vers une position de prélèvement, position de prélèvement dans laquelle les supports d'enregistrement peuvent être saisis à la manière d'une pince et extraits, les logements d'enregistrement du boîtier étant recouverts, lorsque les éléments porteurs sont rentrés, par une paroi (62), chaque élément porteur comportant une partie intérieure qui peut pivoter autour de l'axe disposé près de la façade de boîtier et près d'une paroi latérale de boîtier, chaque élément porteur est sollicité par un ressort dans sa position sortie définie par une butée et est bloqué dans sa position rentrée en opposition à la sollicitation du ressort au moyen d'un verrou qui est disposé près de l'autre paroi latérale, caractérisé en ce que la position sortie est définie par la butée d'une manière telle qu'un sous-ensemble (26) de façade articulé sur la partie intérieure vient reposer dans la zone frontale du boîtier, son axe d'articulation (28) étant perpendiculaire à l'axe de pivotement, tandis que les sous-ensembles de façade constituent ensemble dans la position rentrée la paroi de revêtement.

2. Coffret selon la revendication 1, caractérisé en ce que l'élément porteur (22) est réalisé sous forme de plaque qui chevauche la largeur libre du boîtier.

3. Coffret selon la revendication 1 ou 2, caractérisé en ce que le sous-ensemble (26) de paroi de façade est relié à l'élément porteur au moyen d'une articulation en pellicule (92) moulée par injection.

4. Coffret selon la revendication 1, 2 ou 3, caractérisé en ce que le sous-ensemble (26) de paroi de façade comprend une paroi (62) de façade dressée à la manière d'un montant, reliée à une partie de fond en forme de segment circulaire.

5. Coffret selon la revendication 1, 2, 3 ou 4, caractérisé en ce que l'angle de rabattement du sous-ensemble (26) de paroi de façade est défini par des butées.

6. Coffret selon la revendication 1, caractérisé en ce que les sous-ensembles (26) de paroi de façade sont déplacés de façon forcée dans leur position rabattue lorsque l'élément porteur (22) est sorti.

7. Coffret selon la revendication 6, caractérisé par un ressort de contrainte (60) destiné au rabattement du sous-ensemble de paroi de façade.

8. Coffret selon la revendication 7, caractérisé en ce que le ressort de sollicitation est un ressort à lame (90).

9. Coffret selon la revendication 7, caractérisé en ce que le ressort de sollicitation est un ressort hélicoïdal de compression (122).

10. Coffret selon la revendication 7, caractérisé en ce que le ressort de contrainte est un ressort hélicoïdal de traction.

11. Coffret selon la revendication 7, caractérisé en ce que le ressort de sollicitation est un ressort à branche à collet (60).

12. Coffret selon la revendication 7, caractérisé en ce que la force du ressort (30) qui sollicite l'élément porteur (22) dans la position sortie est transférée au sous-ensemble (26) de paroi de façade par un transfert de force (112).

13. Coffret selon la revendication 1, caractérisé en ce que le sous-ensemble (26) de paroi de façade est sollicité par un dispositif (102) de ressort en pattes de grenouille dans chacune de ses deux positions finales stables et est mobile à la main de l'une vers l'autre.

14. Coffret selon la revendication 7, caractérisé par un dispositif d'encliquetage (132) destiné à tenir le sous-ensemble (26) d'éléments de façade dans la position de rappel pour faire pivoter à nouveau l'élément porteur (22) dans le boîtier (20).

15. Coffret selon la revendication 1, caractérisé en ce que chaque élément porteur (22) est guidé dans son mouvement de pivotement à son arête d'extrémité opposée à l'axe de pivotement (24) au moyen d'un guidage (36) fixe sur le boîtier.

16. Coffret selon la revendication 1, caractérisé en ce que chaque élément porteur est supporté dans sa position rentrée par un rail de support (36) fixe sur le boîtier.

**17.** Coffret selon la revendication 15, caractérisé en ce que le sous-ensemble de paroi de façade comporte une paroi de façade (62) dressée à partir d'une partie de fond en forme de secteur et en ce que la partie de fond est également guidée dans le boîtier dans un mouvement de pivotement.

**18.** Coffret selon la revendication 1, caractérisé en ce que l'élément porteur (22) comporte une surface de fond renfoncée de manière concave.

**19.** Coffret selon la revendication 17 ou 18, caractérisé en ce que la partie de fond du sous-ensemble de paroi de façade comporte une collerette (42) qui ne supporte le support d'enregistrement introduit (50) que dans sa zone de bord.

**20.** Coffret selon la revendication 2, caractérisé en ce que l'élément porteur (22) est pourvu d'abaisseurs (52) pour un disque audio ou disque vidéo (50) qui y repose.

**21.** Coffret selon la revendication 20, caractérisé en ce qu'au moins l'un des abaisseurs (52) est disposé sur un bras (54) sollicitant élastiquement transversalement à la direction d'insertion du disque.

**22.** Coffret selon la revendication 21, caractérisé en ce que le bras de sollicitation élastique (54) est réalisé et disposé de telle manière qu'il exerce sur le disque (50), après introduction du disque sur plus de la moitié de son diamètre, une force orientée vers l'intérieur.

**23.** Coffret selon la revendication 11, caractérisé en ce que le ressort à collerette à branche repose par son enroulement sur un tourillon (24) destiné au déplacement de pivotement de l'élément porteur.

**24.** Coffret selon la revendication 1, caractérisé en ce qu'un verrou (32) qui peut être soulevé hors d'un loquet (68) situé sur le côté du coffret au moyen d'une touche (34) accessible depuis l'extérieur de la paroi de façade est logé dans le sous-ensemble de paroi de façade.

**25.** Coffret selon la revendication 24, caractérisé en ce que le verrou (32) est reçu en pouvant être logé dans le sous-ensemble (26) de paroi de façade d'une manière sensiblement parallèle au plan de la paroi de façade.

**26.** Coffret selon la revendication 24, caractérisé en ce que le verrou est sollicité élastiquement (66) dans sa position de verrouillage.

**27.** Coffret selon la revendication 1, caractérisé en ce qu'un verrou et une touche qui lui est reliée sont conformés sur le sous-ensemble (26) de paroi de façade de façon élastique par rapport au reste du sous-ensemble de paroi de façade.

**28.** Coffret selon la revendication 1, caractérisé en ce qu'il est prévu un dispositif d'affichage (80, 82, 74) qui permet de déterminer si un élément porteur rentré dans le coffret est occupé par un support d'enregistrement ou est libre.

**29.** Coffret selon la revendication 28, caractérisé en ce que le dispositif d'affichage comprend un palpeur (74) en saillie dans l'espace de réception du support d'enregistrement et susceptible d'être logé par insertion de ce dernier, qui est réalisé et disposé pour la commutation d'un affichage optique (80, 82).

**30.** Coffret selon la revendication 28 ou 29, caractérisé en ce que le dispositif d'affichage comprend une source lumineuse (46) pour éclairer une fenêtre d'affichage et en ce que le flux lumineux est modulé en fonction de l'état d'occupation de l'élément porteur.

**31.** Coffret selon la revendication 30, caractérisé en ce que la source lumineuse (46) est disposée à l'extérieur du boîtier et en ce que la lumière est transférée au moyen de conducteurs lumineux (80, 82) vers une fenêtre d'affichage ménagée dans le sous-ensemble de paroi de façade.

**32.** Coffret selon la revendication 31, caractérisé par des conducteurs lumineux (80, 82) disposés dans l'élément porteur et/ou dans le sous-ensemble de paroi de façade.

**33.** Coffret selon la revendication 29 ou 32, caractérisé en ce que le palpeur (74) est réalisé et disposé pour l'actionnement d'un volet (78) interrompant ou libérant le flux lumineux.

_Fig. 1_

**Fig. 2**

*Fig. 3*

*Fig. 5*

*Fig. 4*

*Fig. 6*

_Fig. 7_

_Fig. 8_

_Fig. 9_

14

Fig. 10

Fig. 11

Fig. 12

# *Fig. 13*

_Fig. 14_

_Fig. 15_

_Fig. 16_